# EUROPÄISCHE PATENTANMELDUNG

(11) **EP 1 288 809 A1**
(43) Veröffentlichungstag der Anmeldung: **05.03.2003**
(21) Anmeldenummer: 02000395.0
(22) Anmeldetag: 07.01.2002
(51) Int. Cl.: G06F 17/60

(54) **Automatische Generierung von Fragenkatalog-Programmen**

(30) Priorität: 27.08.2001 DE 10141816
(71) Anmelder: Aagon Consulting GmbH, 59494 Soest (DE)
(72) Erfinder: Häckel, Sascha, 59494 Soest (DE)
(74) Vertreter: Dendorfer, Claus, Dr.

(57) **Zusammenfassung**

Bei einem Verfahren zur automatischen Erstellung eines Fragenkatalog-Programms (12) wird eine Benutzerschnittstelle bereitgestellt, die es einem Benutzer ermöglicht, zum Erstellen eines Projekts (16) einzelne Fragen und/oder Fragenkomplexe aus einem Fragenpool (14) auszuwählen, und es wird das Fragenkatalog-Programm (12) aus dem Projekt (16) und/oder dem Fragenpool (14) automatisch erstellt. Ein computerlesbarer Datenträger weist ein nach diesem Verfahren erstelltes Fragenkatalog-Programm bzw. Instruktionen auf, die einen Computer dazu veranlassen, ein derartiges Erstellungsverfahren auszuführen. Bei einem Verfahren zur Generierung von Befragungsdaten wird ein automatisch erstelltes Fragenkatalog-Programm (12) eingesetzt.

## Beschreibung

Die Erfindung betrifft das Gebiet von Programmen, die als Hilfsmittel bei der Befragung von Personen (z.B. Kunden, potentiellen Kunden, Wählern, etc.) verwendet werden. Insbesondere betrifft die Erfindung das Gebiet der technischen Hilfsmittel zur Generierung derartiger Programme.

Das Durchführen einer sachgerechten Befragung ist ein zeit- und kostenaufwendiger Vorgang. Dies betrifft sowohl die zur Erstellung eines Fragenkatalogs erforderlichen Vorbereitungsarbeiten als auch die eigentliche Befragung, die beispielsweise bei den Mitarbeitern eines Kunden erfolgt, um die Grundlagen für weitere Beratungs- oder Consultingdienstleistungen zu schaffen.

Im Hinblick auf die Erstellung des Fragenkatalogs besteht ein Bedürfnis, die Arbeit des Beraters oder Consultants während der Vorbereitungszeit auf ein Projekt möglichst zu vereinfachen. Es wäre vorteilhaft, wenn der Berater auf einfachste Weise, bezogen auf die von ihm benötigten Informationen, Fragen aus einem Fragenpool zusammenstellen könnte. Sollte im Fragenpool keine passende Frage vorhanden sein, so soll der Berater ohne allzu große Einarbeitungszeit in der Lage sein, Fragen selbst zu kreieren, zu entfernen oder zusammenzufügen. Es wäre wünschenswert, wenn sich der Berater hierbei ausschließlich um den Inhalt der Fragen kümmern müßte, nicht jedoch um deren Programmierung.

Ferner besteht ein Bedürfnis, eventuelle Fehlerquellen bei der Erstellung des Fragenkatalogs sowie bei der Abfrage der Informationen beim Kunden möglichst zu eliminieren. Häufig auftretende Fehler sind z.B. das Vergessen oder das Hinzufügen von falschen Fragen im Vorfeld und auch das versehentliche Übergehen von wichtigen Fragen bei der Durcharbeitung zusammen mit dem Kunden. Folglich ist es wünschenswert, die Vollständigkeit der Fragen im Vorfeld zu prüfen und bei der eigentlichen Befragung sicherzustellen, daß relevante Fragen nicht unbeantwortet übersprungen werden. Andererseits ist es vorteilhaft, wenn die zu befragende Person nur die für sie bedeutsamen Fragen beantworten muß bzw. sieht. Es ist daher wünschenswert, die Fragen dynamisch in Abhängigkeit von den vom Kunden bereits gegebenen Antworten zu stellen.

Ein weiteres Bedürfnis besteht dahingehend, die einzelnen Fragen und ihre Zusammenstellung vor unautorisiertem Zugriff durch den Kunden und auch durch Dritte zu schützen.

Die Erfindung hat die Aufgabe, eines oder mehrere der oben aufgeführten Probleme ganz oder zum Teil zu lösen.

Erfindungsgemäß wird diese Aufgabe ganz oder zum Teil gelöst durch ein Verfahren zur Erstellung eines Fragenkatalog-Programm mit den Merkmalen des Anspruchs 1, durch einen computerlesbaren Datenträger gemäß Anspruch 8 bzw. Anspruch 9 und durch ein Verfahren zur Generierung von Befragungsdaten gemäß Anspruch 10. Die abhängigen Ansprüche definieren bevorzugte Ausführungsformen der Erfindung. Unter einem "computerlesbaren Datenträger" sollen vorliegend nicht nur Medien wie Disketten, Bänder, CD-ROMs etc. verstanden werden, sondern alle computerlesbaren Medien, beispielsweise auch immaterielle Medien wie elektrische Signale oder Funkwellen.

Allgemein beruht die Erfindung auf der Grundidee, mittels eines hier auch "Editor" genannten Erstellungsprogramms ein geeignetes Fragenkatalog-Programm (das hier auch als "Wizard" bezeichnet wird) zumindest teilweise automatisiert zu erzeugen. Das Fragenkatalog-Programm dient dann als Hilfsmittel für die eigentliche Befragung.

Durch die Erfindung wird die zeitaufwendige Arbeit im Zusammenhang mit dem Vorbereiten und Durchführen einer Befragung erheblich verringert. Mögliche Fehlerquellen werden vermieden.

Ein Ausführungsbeispiel der Erfindung und mehrere Ausführungsalternativen werden im folgenden genauer beschrieben. Es wird auf die schematischen Zeichnungen verwiesen, in denen zeigen:
Fig. 1 eine schematische Darstellung des Gesamtablaufs nach einem Ausführungsbeispiel der Erfindung,
Fig. 2 ein Flußdiagramm der Erstellung und Ausführung eines Fragenkatalog-Programms gemäß dem Ausführungsbeispiel von Fig. 1,
Fig. 3 eine beispielhafte Bildschirmansicht bei der Erstellung des Fragenpools, und
Fig. 4 eine beispielhafte Bildschirmansicht bei der Projekterstellung.

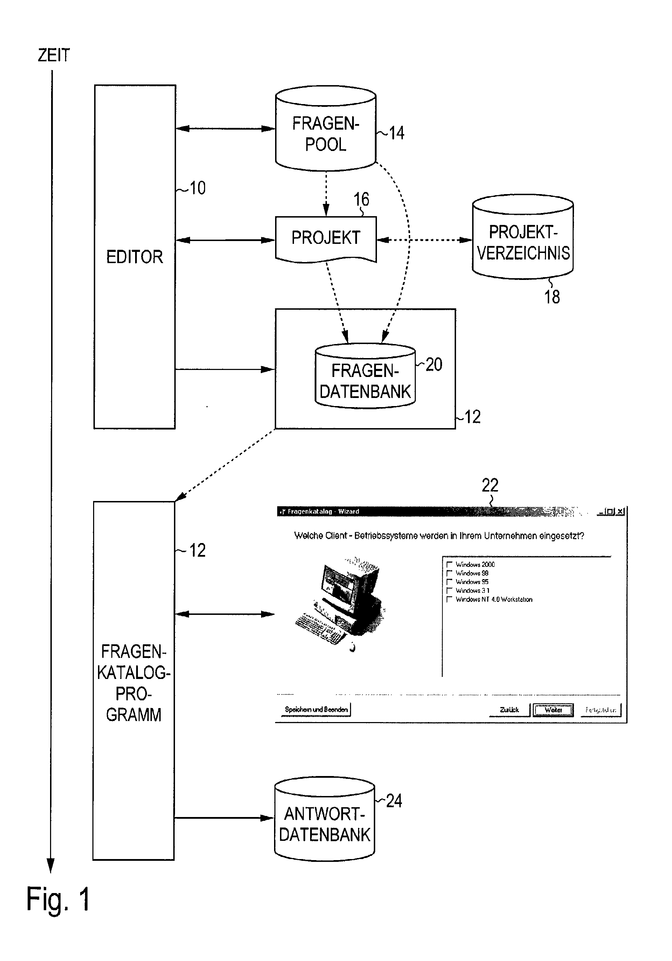

In Fig. 1 ist schematisch dargestellt, wie zunächst mittels eines Editors 10 ein Fragenkatalog-Programm 12 erstellt wird und wie das Fragenkatalog-Programm 12 dann bei einer Befragung verwendet wird. Die zeitliche Reihenfolge der in Fig. 1 veranschaulichten Schritte ist durch einen Pfeil am linken Bildrand angedeutet.

Der Editor 10 wird zunächst verwendet, um auf einen Fragenpool 14 mit vordefinierten Fragen zuzugreifen und/oder den Fragenpool 14 zu ergänzen oder zu ändern. Mit dem Begriff "Fragenpool" wird allgemein eine Ansammlung von Fragen bezeichnet, die im vorliegenden Beispiel in einer Datenbank abgelegt sind. Der Editor 10 dient ferner dazu, aus den Fragen im Fragenpool 14 ein Projekt 16, mit anderen Worten einen Fragenkatalog, zusammenzustellen. Das Projekt 16 kann in einem Projektverzeichnis 18 gespeichert oder von dem Projektverzeichnis 18 importiert werden. Schließlich dient der Editor 10 zur Generierung des Fragenkatalog-Programms 12 aus dem Projekt 16. Das Fragenkatalog-Programm 12 enthält eine Fragen-Datenbank 20, die eine entsprechend dem Projekt 16 getroffene Auswahl von Fragen aus dem Fragenpool 14 und weitere aus dem Projekt 16 entnommene Informationen aufweist. Alle diese Schritte dienen dazu, eine Befragung vorzubereiten.

Die eigentliche Befragung wird dann mit Hilfe des generierten Fragenkatalog-Programms 12 vorgenommen. Das Fragenkatalog-Programm 12 stellt eine Benutzerschnittstelle 22 bereit, über die Fragen angezeigt und Antworten eingelesen werden können (in Fig. 1 ist beispielhaft eine Eingabemaske zur Beantwortung einer Frage gezeigt). Die gesammelten Antworten werden in einer Antwort-Datenbank 24 zur späteren Auswertung abgelegt.

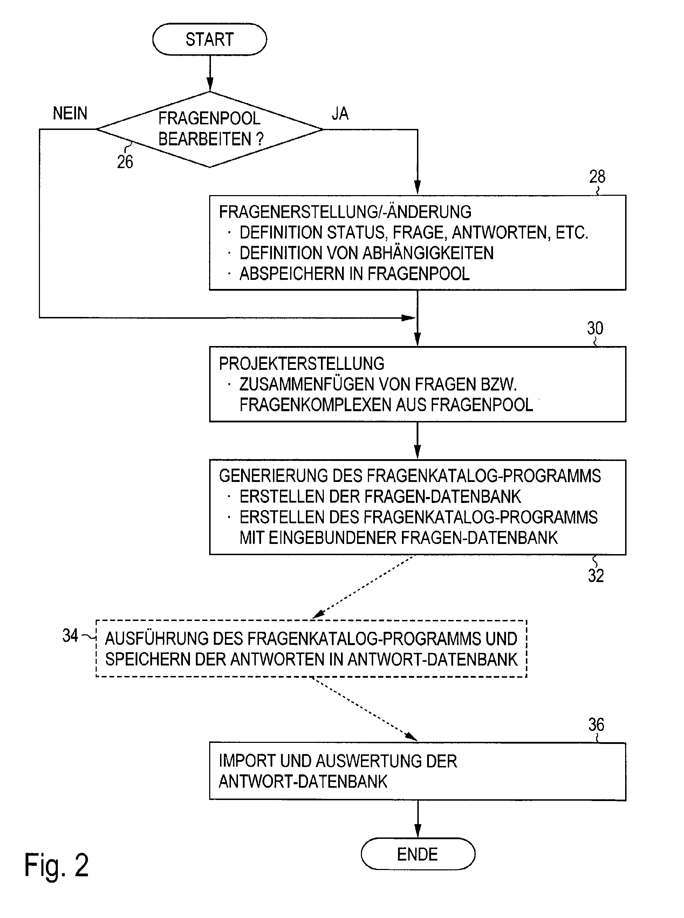

Fig. 2 gibt einen genaueren Überblick über die von dem Editor 10 (also dem Erstellungsprogramm) ausgeführten Verarbeitungsschritte. Diese Schritte sind in Fig. 2 durch Rahmen mit durchgezogenen Linien veranschaulicht. Der in Fig. 2 ferner gezeigte Schritt, das Fragenkatalog-Programm 12 auf einem externen Rechner und unabhängig von dem Editor 10 auszuführen, ist mit einem gestrichelten Rahmen dargestellt.

Im vorliegenden Ausführungsbeispiel enthält der Editor 10 Module für die folgenden Aufgaben, die den einzelnen Schritten in Fig. 2 entsprechen:
- Anlegen, Ändern und Löschen von Kategorien, Unterkategorien, Fragekomplexen und Einzelfragen,
- Zusammenstellen eines Fragenkatalogs (Projekts) aus Kategorien, Unterkategorien, Fragenkomplexen und Einzelfragen oder bereits vorhandenen Projekten,
- Erstellen, Speichern und Exportieren des Fragenkatalog-Programms ("Wizard") samt Fragen zum Ausfüllen beim Kunden, und
- Importieren der Antwort-Datenbank nach dem Ausfüllen beim Kunden.

Nach dem Start des Editors 10 wird dem Anwender ein Menü angeboten, aus dem er die gewünschten Module starten kann. Die einzelnen Module weisen eine einfache, dialoggeführte Schnittstelle auf. Der Anwender muß sich beim Start des Editors 10 mit Benutzername und Kennwort anmelden. Mehrere unterschiedliche Berechtigungsstufen sind vorgesehen. So können manche Benutzer nur Fragenkataloge (Projekte) zusammenstellen, exportieren und importieren, während andere Benutzer auch Fragen anlegen, ändern und löschen dürfen.

Eine Bearbeitung des Fragenpools 14 ist nur dann erforderlich, wenn entweder noch gar kein Fragenpool 14 vorhanden ist oder wenn die vorhandenen Fragen nicht adäquat sind. Soll der Fragenpool 14 bearbeitet werden ("Ja"-Zweig in Abfrage 26), so werden die für die Erstellung und/oder Änderung von Fragen erforderlichen Aktionen in Schritt 28 durchgeführt. Für jede Frage muß zunächst deren Status angegeben werden. Der Status gibt an, ob die Frage unabhängig oder Teil eines Fragenkomplexes ist (ein Fragenkomplex ist eine logische Gruppierung von Fragen, die untereinander in Abhängigkeit stehen, so daß es keinen Sinn machen würde, nur eine einzelne Frage aus dieser Gruppierung zu stellen). Wenn die Frage in einen Fragenkomplex eingebettet ist, muß ferner angegeben werden, ob sie eine Root-Frage oder eine Sub-Root-Frage oder eine andere Frage ist.

Die Kennung als Root-Frage oder Sub-Root-Frage steht im Zusammenhang mit der Tatsache, daß die Reihenfolge, in der die einzelnen Fragen bei der späteren Befragung gestellt werden sollen, durch Pfade vorgegeben ist. Eine Root-Frage ist eine Frage, die bei ihrer Beantwortung das "Abgehen" mehrerer Pfade nach sich zieht. Entsprechend ist eine Sub-Root-Frage eine solche Frage innerhalb eines Root-Frage-Pfades. Weist beispielsweise die Frage Kontrollkästchen als Antwortmöglichkeiten auf, so wird, wenn ein Kontrollkästchen angeklickt wird, der entsprechende Unterpfad weiterverfolgt. Danach muß jedoch, wenn ein weiteres Kontrollkästchen angeklickt wird, der nächste Pfad geöffnet werden, nicht jedoch der nächste Fragenkomplex. Dieses Verhalten ist grob vergleichbar mit einer "*for*"-Schleife eines Programms.

Außer dem Status werden bei der Fragenerstellung der Text der zu erstellenden Frage, Antwortmöglichkeiten und so weiter angegeben. Zusätzlich besteht die Möglichkeit, Strukturbildschirme zu erstellen, die beim späteren Ablauf des Fragenkatalog-Programms 12 angezeigt werden, um die Fragenfolge zu gliedern und die einzelnen Fragenkomplexe einzuleiten (z.B. Bild einer Netzwerkkarte und Text "Netzwerktechnik" zu Beginn des entsprechenden Fragenkomplexes).

Es folgt die Definition von Abhängigkeiten der Frage innerhalb des Fragenkomplexes bzw. von anderen Fragen. Hier muß zunächst die Position der Frage im Fragenkomplex angegeben werden. Ist die zu erstellende Frage die erste eines Fragenkomplexes, so muß noch festgelegt werden, ob der gesamte Fragenkomplex zur Laufzeit des erstellten Fragenkatalog-Programms 12 wiederholt werden darf. Ferner wird der bei der Befragung zu durchlaufende Pfad festgelegt, indem die Art der weiteren Schritte angegeben wird. Zur Auswahl stehen dabei die folgenden Möglichkeiten:
- Repeat: mehrfaches Ausfüllen für mehrere Komponenten,
- Seriell Typ a: nächste Frage unabhängig von der Antwort auf die vorliegende Frage gestellt,
- Seriell Typ b: je nach der Antwort auf die vorliegende Frage wird eine von mehreren vorgegebenen nächsten Fragen gestellt, und
- Seriell Typ c: wenn a und b, dann erst Pfad A und danach Pfad B.

Weitere Abhängigkeiten von Fragen können in Form von Bedingungen definiert werden. Beispielsweise kann angegeben werden, daß eine Frage erst dann gestellt werden soll, wenn zwei andere Fragen bereits in einer bestimmten Weise (z.B. mit "ja") beantwortet wurden.

Der Editor 10 stellt ferner Funktionen bereit, um Fragen in bestehende Fragenkomplexe einzufügen. Dies beinhaltet insbesondere eine automatische Anpassung der Pfade an den jeweiligen neuen Kontext.

Ein weiteres Merkmal des Editors 10 ist es, daß Fragen Themenbereichen zugeordnet werden können. Dementsprechend stellt der Editor 10 auch Funktionen bereit, um diese Themenbereiche und Unterthemen zu definieren, zu editieren und zu löschen.

Schließlich ist auch eine Möglichkeit vorgesehen, um im Editor 10 einer Frage Skripte (z.B. *Delphi Scripts)* hinzuzufügen. Dadurch werden die Verarbeitungsmöglichkeiten des erzeugten Fragenkatalog-Programms 12 erheblich gesteigert. Beispielsweise kann ein Skript verwendet werden, das während der Befragung Systeminformationen des die Benutzerschnittstelle 22 bereitstellenden Rechners ausliest und in der Antwort-Datenbank 24 speichert.

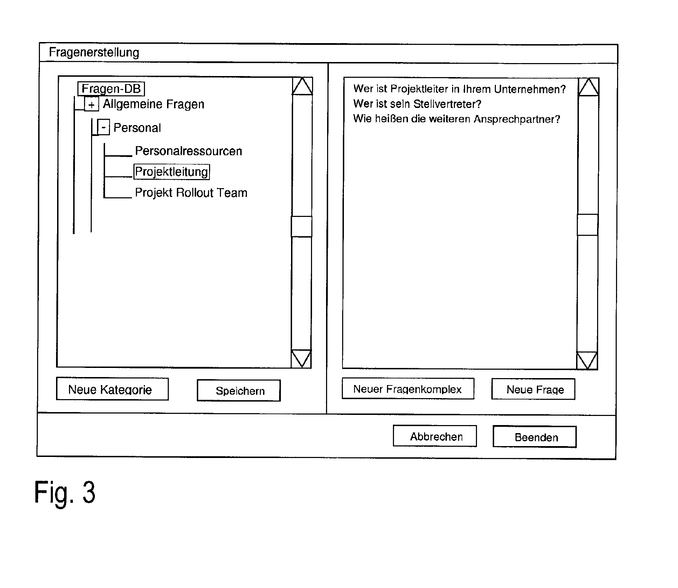

Fig. 3 zeigt eine beispielhafte Bildschirmdarstellung der für die Fragenerstellung im Editor 10 verwendeten Benutzeroberfläche. Im linken Bildschirmbereich sind die Kategorien in einer hierarchischen Baumdarstellung aufgelistet; im rechten Bildschirmbereich werden die Texte der dazugehörenden Fragen und Fragenkomplexe angezeigt. Neue Kategorien können hinzugefügt werden, indem man eine Ebene auswählt, die Schaltfläche "Neue Kategorie" drückt und einen Namen vergibt. Neue Fragen bzw. Fragenkomplexe können eingegeben werden, indem man die entsprechenden Schaltflächen drückt (dies ist jeweils nur auf der untersten Ebene einer Kategorie möglich). Es öffnet sich dann ein Fenster zur Eingabe der Frage bzw. des Fragenkomplexes. Wenn es sich um einen Fragenkomplex handelt, ist eine Schaltfläche "Weitere Fragen" vorgesehen, über die weitere Fragen eingegeben werden können. Mit der Schaltfläche "Speichern" wird die Frage bzw. der Fragenkomplex gespeichert.

Intern verwaltet der Editor 10 Fragen als Objekte. Beispielsweise kann eine Basis-Klasse vorgesehen sein, die diejenigen Eigenschaften (*properties*) aufweist, die auf alle Fragentypen zutreffen (z.B. einen Indexwert im Fragenpool, den Fragentext, den Status, den Index der nächsten Fragen und so weiter). Ferner können für jeden Fragentyp spezielle Eigenschaften vorgesehen sein (z.B. für die Antwort eine je nach dem Fragentyp gewählte Datenstruktur und so weiter).

Die in Schritt 28 erstellten oder geänderten Fragen werden als Fragenpool 14 in einer Datenbank gespeichert. Die Datenbank ist im hier beschriebenen Ausführungsbeispiel eine von dem Editor 10 unabhängige Software. Gespeichert werden für jede Frage ein Indexwert, der Fragentyp, der Fragentext, Verweise auf Bilder, Antwortmöglichkeiten, Abhängigkeiten innerhalb des Fragenkomplexes, Bedingungen für die Anzeige von Fragen, eine Kategorisierung nach Inhalt, ein Feld für Skripte, eine Angabe, ob eine Wiederholung (*loop*) der Frage oder des Fragenkomplexes zulässig ist, ein leeres Feld für die vorangegangene Frage (in das erst zur Laufzeit des Fragenkatalog-Programms 12 Daten eingeschrieben werden), und Informationen hinsichtlich der Zugehörigkeit zu einem Fragenkomplex, des Fragenstatus und der Position innerhalb des Fragenkomplexes. Eine weitere Tabelle ist vorgesehen, die für jeden Fragenkomplex einen Indexwert und die Indexwerte der zu diesem Fragenkomplex zugehörigen Fragen enthält.

Schritt 30 in Fig. 2 betrifft die Projekterstellung, also die Zusammenstellung der Fragen bzw. Fragenkomplexe aus dem Fragenpool 14. Nach dem Start des entsprechenden Moduls des Editors 10 werden dem Anwender zwei Möglichkeiten zum Erstellen von Fragenkatalogen angeboten, nämlich erstens das Auswählen und Überarbeiten eines bestehenden Fragenkatalogs, der dann unter einem anderen Namen gespeichert werden kann, und zweitens das Anlegen, Bearbeiten und Speichern eines neuen Fragenkatalogs.

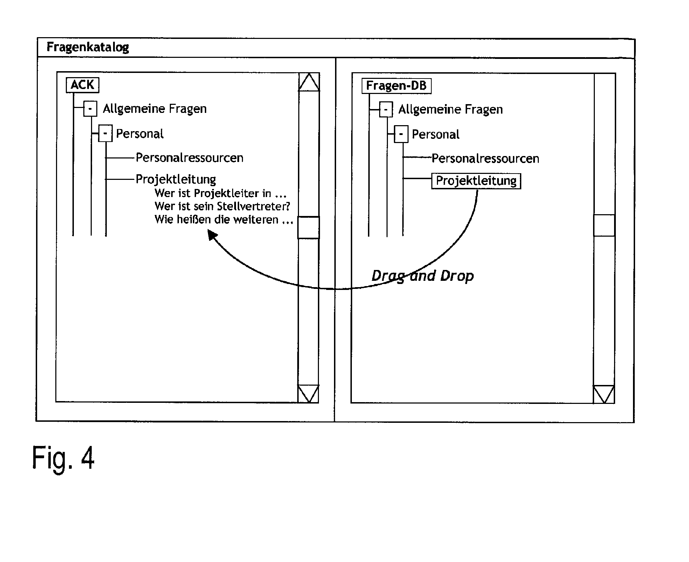

Um ein neues Projekt zu erstellen, werden dem Anwender alle Kategorien und deren Unterkategorien in einer Baumstruktur angeboten. Die Fragen werden nach Thema und Fragenkomplex sortiert dargestellt. Dies ist beispielhaft in der Bildschirmansicht von Fig. 4 gezeigt. Im linken Bildschirmabschnitt ist der bisher zusammengestellte Fragenkatalog (das Projekt 16) zu sehen; im rechten Bildschirmabschnitt befinden sich Fragen aus dem Fragenpool 14. Diese Fragen können nun vom Anwender per *"Drag and Drop"* in das Projekt (den Fragenkatalog) eingefügt werden.

Bei der Einfügeoperation per *"Drag and Drop"* (oder in Ausführungsvarianten auf andere Weise) sind mehrere Maßnahmen vorgesehen, um die Bedienungsfreundlichkeit zu erhöhen und Fehler zu vermeiden. So werden beispielsweise, wenn der Anwender in dem in Fig. 4 dargestellten Kontext die Kategorie "Allgemeine Fragen" zum Projekt hinzufügt, auch alle Unterebenen samt den darin liegenden Fragen in den Katalog eingefügt. Der Anwender kann aber auch nur den Fragenkomplex "Projektleitung" seinem Fragenkatalog hinzufügen. Ferner kann der Anwender einen Teil des Kataloges öffnen und aus den einzelnen Ebenen Fragen entfernen, neue hinzufügen oder ganze Ebenen entfernen. Der Editor 10 stellt dabei automatisch sicher, daß Fragenkomplexe nur im Ganzen hinzugefügt bzw. entfernt werden. Ferner kann der Anwender aus der Baumstruktur nur eine Unterebene zum Katalog hinzufügen, oder auch einzelne Fragen, sofern sie nicht zu einem Fragenkomplex gehören.

In manchen Ausgestaltungen kann vorgesehen sein, daß nur Fragen(komplexe) bis Ebene 2 oder ganze Themen (Ebene 1) per *"Drag and Drop"* angesprochen werden können. Auch andere im Fragenpool 14 definierte Abhängigkeiten zwischen den Fragen können ausgewertet werden. Es kann beispielsweise vorgesehen sein, daß eine erste Frage bei der *"Drag and Drop*"-Operation automatisch, wie im Fragenpool 14 definiert, weitere Fragen mit sich zieht. Auch kann überprüft werden, ob vorher benötigte Fragen schon im Projekt 16 vorhanden sind.

Insgesamt wird durch die in den letzten beiden Absätzen genannten Maßnahmen sichergestellt, daß bei der Erstellung eines Projekts 16 nur eigenständige Fragen und Fragenkomplexe aus dem Fragenpool 14 verwendet werden und keine aus dem Zusammenhang gerissenen Einzelfragen. Der Pfad zwischen zwei Fragenkomplexen bzw. Fragen definiert sich aus deren Reihenfolge in der Zusammenstellung.

Bei der Erstellung eines Projekts können ferner Strukturierungsbildschirme eingefügt werden. Zur Überprüfung stellt der Editor 10 eine Vorschau-Funktion bereit, die die Ausführung des späteren Fragenkatalog-Programms 12 simuliert. Ist die Projekterstellung abgeschlossen, speichert der Anwender das Projekt 16 im Projektverzeichnis 18 ab. Alle Fragen und Fragenkomplexe werden hierbei in einer eigenen Tabelle (und nicht nur durch einen Verweis auf den entsprechenden Eintrag im Fragenpool 14) gespeichert.

Neben der gerade beschriebenen Erstellung können Projekte 16 auch von einer externen Quelle importiert und dann modifiziert werden, um bereits geleistete Vorarbeiten oder frühere, ähnliche Projekte zu nutzen. Auch der Export von Projekten 16 ist möglich.

In Schritt 32 von Fig. 2 wird das hier auch als "Wizard" bezeichnete Fragenkatalog-Programm 12 von dem entsprechenden Modul des Editors 10 automatisch generiert. In dem Fragenkatalog-Programm 12 sind die zum Katalog (dem Projekt 16) gehörenden Fragen in der festgelegten Reihenfolge eingebunden. Ferner weist das Fragenkatalog-Programm 12 eine Steuerung mit allen im Projekt 16 vorgesehenen Verzweigungen und Schleifen auf, die nach dem Starten des Fragenkatalog-Programms 12 den Ablauf der Fragen steuert. Die in dem Fragenkatalog-Programm 12 enthaltenen Daten sind verschlüsselt, um ein unberechtigtes Ausspähen zu verhindern. Das erstellte Fragenkatalog-Programm 12 ist eine ausführbare Datei, die auf eine CD gebrannt und dem Kunden zugeschickt werden kann oder die auf einem tragbaren Rechner eines Beraters installiert werden kann. Da das Fragenkatalog-Programm 12 auch zur Ausführung auf Fremdrechnern gedacht ist, sollte es möglichst keine Installation (z.B. Einträge in einer Registry) erfordern und weitestgehend betriebssystemunabhängig sein.

In der Fragen-Datenbank 20 des Fragenkatalog-Programms 12 sind die Fragen aufgrund ihrer Zusammenstellung im Projekt 16 gespeichert. In diese Datenbank 20 wird erstens der Index aus dem Fragenpool 14 übernommen, um z.B. bei einer Änderung des Fragenpools 14 die Fragen aktualisieren zu können. Zweitens wird ein weiterer Index verwendet, der zur Laufzeit des Fragenkatalog-Programms 12 als Sprungmarke verwendet wird. Dies ist nötig, um einen eindeutigen Zugriff auf eventuell doppelt vorhandene Fragen zu gewährleisten. Bilder und Grafiken werden im Fragenkatalog-Programm 12 verschlüsselt (und eventuell komprimiert) gespeichert, um ein unerlaubtes Kopieren zu verhindern. Ferner werden im Fragenkatalog-Programm 12 Informationen zum Kunden (z.B. Name des Kunden und/oder des laufenden Vorhabens) gespeichert, und eine Maximalzahl für die erlaubten Durchläufe wird festgelegt. Optional kann ein Zusammenfassungsbildschirm angezeigt werden.

Programmiertechnisch besteht das Fragenkatalog-Programm 12 im hier beschriebenen Ausführungsbeispiel aus drei Komponenten, nämlich der objektrelationalen Fragen-Datenbank 20, einer Middleware (Verbindungsmodul) und einem Benutzerschnittstellen-Modul. Die Fragen-Datenbank 20 stellt die folgenden Informationen zur Verfügung:
- Fragen: Hier werden sowohl das Formular einer spezialisierten Frage als auch Skripte zur Realisierung der Benutzerschnittstelle für dieses Formular hinterlegt, und
- Zusammenstellung: Hier werden die Formulare für das Fragenkatalog-Programm 12 zusammengeführt. Zur Laufzeit des Fragenkatalog-Programms 12 wird diese Zusammenstellung dynamisch durchlaufen, um den weiteren Fragenablauf anhand der Antworten auf bereits vorher beantwortete Fragen zu generieren.

Die Middleware ist das für die Zusammenarbeit der einzelnen Formulare zentrale Element. Anhand einer in der Fragen-Datenbank 20 enthaltenen Ablaufklasse wird durch die Middleware die Instanz des ablaufenden Fragenkatalog-Programms 12 je nach den beantworteten Fragen dynamisch angepaßt. Die grafische Benutzerschnittstelle führt die in der Fragen-Datenbank 20 hinterlegten Skripte aus, wobei dem Benutzer jeweils genau ein Formular angezeigt wird und der Benutzer Zugriff auf Hilfs- und andere allgemeine Funktionen hat. Während des Ablaufs des Fragenkatalog-Programms 12 hat die Benutzerschnittstelle Zugriff auf jeweils genau ein Formular, nicht aber auf vorher angezeigte Formulare. Die Middleware berücksichtigt nur den Gesamtablauf, ohne die einzelnen Antworten auf die Fragen zu beachten, und die Fragen-Datenbank 20 stellt der Benutzerschnittstelle und der Middleware jeweils die von diesen Modulen speziell benötigten Informationen zur Verfügung.

Die Ausführung des Fragenkatalog-Programms 12 im Zuge der Befragung (Schritt 34) wird unten noch im Detail beschrieben. Die als Ergebnis erhaltenen Antworten werden in der Antwort-Datenbank 24 gespeichert. Es kann eine Möglichkeit vorgesehen sein, um die gewonnenen Daten auf Diskette zu speichern und zur Auswertung an einen entsprechenden Dienstleister zu senden. Im hier beschriebenen Ausführungsbeispiel soll jedoch das Fragenkatalog-Programm 12 ausschließlich auf einem tragbaren Rechner eines Beraters ausgeführt werden. Die komplette Antwort-Datenbank 24 steht dann zur Auswertung zur Verfügung. Die Antwort-Datenbank 24 kann in unterschiedlichen Ausführungsalternativen entweder in die Fragen-Datenbank 20 integriert oder als davon getrennte Tabelle oder Tabellenstruktur ausgebildet sein.

Der Auswertungsschritt 36 wird im vorliegenden Ausführungsbeispiel von einem Auswertemodul des Editors 10 durchgeführt. In Ausführungsalternativen ist dagegen ein von dem Editor 10 getrenntes Auswerteprogramm vorgesehen. Das Auswertemodul bzw. das eigenständige Auswerteprogramm sind dazu eingerichtet, die Antwort-Datenbank 24 oder eine entsprechende Antwortdatei zu importieren und mit dem Fragenpool 14 und/oder der Fragen-Datenbank 20 zu synchronisieren. Die Fragen und die gegebenen Antworten werden dann ebenso wie beim Kunden angezeigt oder ausgedruckt oder statistisch ausgewertet oder zur anderweitigen Auswertung in ein geeignetes Datenformat konvertiert.

Der bereits kurz beschriebene Vorgang des Ausführens des Fragenkatalog-Programms 12 auf dem Rechner eines Beraters oder Kunden (Schritt 34 in Fig. 2) wird nun nochmals im Detail erläutert. Im Betrieb zeigt das Fragenkatalog-Programm 12 nach dem Aufruf zunächst einen Startbildschirm an, in dem eine kurze Einführung gegeben wird und Projekt- und Kundendaten, Copyright und die noch zur Verfügung stehende Anzahl an Programmstarts angezeigt werden. Nach Ausschöpfen der Startmöglichkeiten kann das Programm nicht mehr gestartet werden oder muß mit Hilfe eines speziellen Schlüssels für weitere Versuche freigeschaltet werden. Die Sperre des Fragenkatalog-Programms 12 erfolgt durch eine geeignete Veränderung des ausführbaren Programmcodes. Die verschlüsselte Antwort-Datenbank kann aber in jedem Fall vom Editor 10 ausgelesen werden.

Durch Betätigen einer auf dem Startbildschirm angezeigten "Weiter"-Taste gelangt der Benutzer zu einem Statusbildschirm mit Inhaltsverzeichnis, der einen Überblick über die insgesamt zu beantwortenden Fragen und Fragenkomplexe (gegliedert in thematisch zusammenhängende Gruppen) gibt. Sobald die Fragen zu einem Kapitel vollständig ausgefüllt sind, wird es im Inhaltsverzeichnis mit einem Haken gekennzeichnet, um den Überblick zu verbessern und das Auffinden der letzten ausgefüllten Frage zu erleichtern. Beim ersten Start des Fragenkatalog-Programms 12 sind noch keine Antworten vorgegeben. Der Anwender kann nun damit beginnen, die Fragen auszufüllen. Wird die Benutzersitzung unterbrochen und das Programm später wieder gestartet, so werden die bereits gegebenen Antworten wieder geladen und angezeigt.

Die einzelnen Fragen werden auf Fragenbildschirmen (gegebenfalls mit grafischen oder textuellen Erläuterungen; siehe z.B. den Fragenbildschirm in Fig. 1) angezeigt. Dabei wird eine vorgegebene, thematisch sinnvolle Reihenfolge eingehalten.

Jeder neue Fragenkomplex wird durch einen Strukturbildschirm eingeleitet, der den Fragenkomplex erläutert.

Mögliche Fragentypen sind:
- String-Fragen, die mit einer Texteingabe zu beantworten sind (z.B. Eingabe von Namen und Kontaktinformationen auf die Frage "Wer ist der Hauptansprechpartner in Ihrem Unternehmen?")
- Boolean-Fragen, die mit "Ja" oder "Nein" zu beantworten sind (z.B. "Haben Sie einen Proxyserver?")
- Auswahlfragen 1 aus N, die durch die Auswahl einer von mehreren möglichen Alternativen zu beantworten sind (z.B. Frage "Welchen Bustyp hat die von Ihnen eingesetzte Netzwerkkarte?" mit einer Auswahlmöglichkeit durch sogenannte *radio buttons)*
- Auswahlfragen M aus N, die durch die Auswahl einer oder mehrerer möglicher Alternativen zu beantworten sind (z.B. die in Fig. 1 dargestellte Frage mit Auswahl durch Ankreuzfelder (*checkboxes*)).

Das Fragenkatalog-Programm 12 steuert die Abfolge der Fragen. Dabei werden insbesondere die im Projekt 16 definierten Abhängigkeiten berücksichtigt (z.B. "wenn Bedingung, dann Frage a sonst Frage b"). Wenn beispielsweise bei der in Fig. 1 gezeigten Frage nach den Client-Betriebssystemen die drei Betriebssysteme Windows 2000, Windows NT und Windows 98 angekreuzt sind, sorgt das Fragenkatalog-Programm 12 dafür, daß auch die dazugehörenden Installationsprofile abgefragt werden. Die Profile für Windows 95, Windows 3.x, MS-DOS und OS/2 werden übersprungen. In diesem Zusammenhang muß natürlich beim Zusammenstellen des Fragenkatalogs darauf geachtet werden, daß für alle in der Frage genannten Betriebssysteme die entsprechenden Installationsprofile eingebunden werden.

Beim ersten Start des Programms beginnt der Benutzer beim ersten Kapitel des Fragenkatalogs. Bei Antworten, die eine Verzweigung auslösen, werden entweder Fragen automatisch übersprungen oder zusätzliche Fragen gestellt. Außerdem ist zu berücksichtigen, daß auch Mehrfachantworten zu einem späteren Zeitpunkt noch präzisiert werden können und weitere Fragen erforderlich machen, die dann zu einem geeigneten späteren Zeitpunkt angezeigt werden. Wenn ein Fragenkomplex wiederholt werden kann, dann bietet das Fragenkatalog-Programm 12 bei der letzten Frage dieses Komplexes die Möglichkeit, diesen zu wiederholen. Wenn Skripte vorhanden sind, werden diese ausgeführt. Beim Betätigen einer "Weiter"-Schaltfläche der Benutzerschnittstelle 22 (Fig. 1) werden die eingetragenen Informationen sofort in der Antwort-Datenbank 24 gespeichert; beim Drücken der "Zurück"-Schaltfläche wird der der Frage angegliederte Datensatz wieder eingelesen.

Fragenkomplexe (also Fragen, die untrennbar zusammengehören) müssen gegebenenfalls mehrfach wiederholt werden können. Damit können z.B. alle in einem Unternehmen eingesetzten Rechnertypen, Netzwerk-, Grafik-, Soundkarten usw. erfaßt werden. Hierzu ist für jeden Fragenkomplex ein Anfangs- und Endanzeiger (*flag*) vorgesehen, um eine Schleifensteuerung zu ermöglichen. Wird ein Fragenkomplex nicht ausgefüllt, bedeutet das entweder, daß dazu noch keine Informationen vorliegen oder daß die abgefragten Daten nicht im Unternehmen vorkommen. Solche Fragenkomplexe sollen allerdings nicht vollständig aus dem Fragenverlauf herausgenommen werden, da sich während des Ausfüllens der Fragen immer noch Änderungen ergeben könnten. Es ist deshalb wichtig, daß während des Ausfüllens der Weg, auf dem die Fragen abgearbeitet wurden, ständig ― z.B. in einem Zwischenspeicher ― mitgeführt wird. Das gilt insbesondere für den Fall, daß der Anwender zurückgeht und eine Frage, die eine Verzweigung nach sich zieht, so ändert, daß in einen anderen Fragenablauf verzweigt werden muß. Antworten auf Fragen, die zwar ausgefüllt worden sind, später aber wieder verworfen wurden, sollten möglichst nicht sofort gelöscht werden.

In Schritt 34 werden ferner die abgefragten Informationen in der Antwort-Datenbank 24 gespeichert. Wenn alle Fragen abgearbeitet wurden, bietet das Fragenkatalog-Programm 12 zwei Möglichkeiten der Speicherung an, nämlich ein endgültiges Speichern der Daten und ein Zwischenspeichern der bisherigen Ergebnisse. Beim Zwischenspeichern werden alle bereits ausgefüllten Fragen unabhängig von ihrer endgültigen Relevanz abgespeichert und beim nächsten Programmstart wieder geladen. Beim endgültigen Speichern werden die gewonnenen Daten so gespeichert, wie es der zuletzt gewählte Ablauf der Fragen vorgibt. Fragen und Fragenkomplexe, die keine Antworten enthalten, werden dabei ignoriert. Nachdem die Daten gespeichert sind, wird das Fragenkatalog-Programm 12 beendet und kann nicht mehr gestartet werden. Eventuell zwischengespeicherte Daten werden gelöscht.

Aus Sicherheitsgründen ist vorgesehen, daß alle Dateien, mit denen das Fragenkatalog-Programm 12 arbeitet, verschlüsselt sind bzw. verschlüsselt werden. Fragen können aus dem Fragenkatalog-Programm 12 nicht extrahiert werden und auch nicht über die Zwischenablage oder Shortcuts oder Popup-Menus kopiert oder ausgedruckt werden. Allgemein sollen alle Daten, die dem Benutzer oder Kunden zugänglich sind, nur verschlüsselt übergeben werden.

Die Erfindung ist nicht auf die oben beispielhaft erläuterte Ausführungsform beschränkt. Es sind vielmehr, je nach den Gegebenheiten, diverse Abwandlungen vorgesehen. Daher ist die obige Beschreibung nicht als Einschränkung des Erfindungsbereichs zu sehen, sondern lediglich als detaillierte Schilderung des Ausführungsbeispiels.

## Patentansprüche

1. Verfahren zur automatischen Erstellung eines Fragenkatalog-Programms (12), mit den Schritten:
- Bereitstellen einer Benutzerschnittstelle, die es einem Benutzer ermöglicht, zum Erstellen eines Projekts (16) einzelne Fragen und/oder Fragenkomplexe aus einem Fragenpool (14) auszuwählen, und
- automatische Erstellung des Fragenkatalog-Programms (12) aus dem Projekt (16) und/oder dem Fragenpool (14).

2. Verfahren nach Anspruch 1, bei dem es die Benutzerschnittstelle dem Benutzer ferner ermöglicht, neue Fragen im Fragenpool (14) zu erstellen oder vordefinierte Fragen im Fragenpool (14) zu ändern.

3. Verfahren nach Anspruch 1 oder Anspruch 2, bei dem es die Benutzerschnittstelle dem Benutzer ferner ermöglicht, hierarchische Fragekategorien und Unterkategorien zu definieren, wobei die Fragekategorien und Unterkategorien dem Benutzer vorzugsweise in einer baumartigen Ansicht anzeigt werden.

4. Verfahren nach einem der Ansprüche 1 bis 3, bei dem es die Benutzerschnittstelle dem Benutzer ferner ermöglicht, den Status von Fragen und/oder Abhängigkeiten zwischen den Fragen und/oder Fragenkomplexen im Fragenpool (14) zu definieren.

5. Verfahren nach Anspruch 4, bei dem mindestens ein für die Beantwortung der Fragen und/oder Fragenkomplexe vorgesehener Pfad zumindest auch durch den Status der Fragen und/oder durch die Abhängigkeiten zwischen den Fragen und/oder Fragenkomplexen definiert wird.

6. Verfahren nach Anspruch 5, bei dem der mindestens eine für die Beantwortung der Fragen und/oder Fragenkomplexe vorgesehene Pfad von der Beantwortung mindestens einer vorhergehender Frage abhängt.

7. Verfahren nach einem der Ansprüche 1 bis 6, bei dem in das generierte Fragenkatalog-Programm (12) eine Fragen-Datenbank (20) eingebunden wird.

8. Computerlesbarer Datenträger mit Instruktionen, die einen Computer dazu veranlassen, ein Verfahren gemäß einem der Ansprüche 1 bis 7 auszuführen.

9. Computerlesbarer Datenträger mit einem nach einem Verfahren gemäß einem der Ansprüche 1 bis 7 erstellten Fragenkatalog-Programm (12).

10. Verfahren zur Generierung von Befragungsdaten durch ein nach einem Verfahren gemäß einem der Ansprüche 1 bis 7 erstelltes Fragenkatalog-Programm (12), mit den Schritten:
- Bereitstellen einer Benutzerschnittstelle (22), die es einem Benutzer ermöglicht, Fragen abzulesen und Antworten einzugeben, und
- Speichern der Antworten in einer Antwort-Datenbank (24).
